# FASCICULE DE BREVET EUROPEEN

(11) **EP 2 591 668 B1**
(45) Date de publication et mention de la délivrance du brevet: **14.05.2014**
(21) Numéro de dépôt: 12183791.8
(22) Date de dépôt: 11.09.2012
(51) Int. Cl.: A01J 25/15

(54) **Dispositif de palettisation notamment dans le domaine de la fabrication du fromage**
Palletisation device, in particular for the cheese industry
Palettisierungsvorrichtung, insbesondere für den Bereich der Käseherstellung

(30) Priorité: 10.11.2011 FR 1160284
(43) Date de publication de la demande: 15.05.2013
(73) Titulaire: Evoli, 25770 Serre les Sapins (FR)
(72) Inventeur: Gaillard, Pascal, 25000 Besancon (FR)
(74) Mandataire: Brungard, Yves Francois

(56) Documents cités:
- EP-A1- 2 283 722
- US-B1- 7 437 991

## Description

La présente invention concerne une installation destinée notamment au domaine de l'agroalimentaire, pour la fabrication du fromage à pâte pressée, comportant :
- un poste de formation d'un caillé à partir de lait et de présure, à transférer avec le sérum ainsi généré, vers
- un poste de moulage dans lequel sont disposés des moules perforés, préalablement remplis d'un caillé,
- un poste de pressage en forme de tour circulaire, comprenant une pluralité de colonnes étagées, disposées concentriquement, dans lesquelles sont entreposés les moules de caillé, puis soumis à une pression afin d'évacuer le sérum généré par le caillé,
- un poste de transfert intermédiaire des moules depuis le poste de moulage vers le poste de pressage,
- un palettiseur sur lequel est disposé successivement chaque moule issu du poste de transfert, pour le placer à un emplacement libre du poste de pressage.

A titre d'exemple illustratif, pour 5000 litres de lait, on ajoute 10 litres de présure et d'eau, générant la formation de caillé (solide) et de sérum (liquide). Le caillé ainsi formé constitue un bloc qu'il faut ensuite casser pour le réduire en grain.

C'est ce mélange caillé-sérum qui sera transféré vers le poste de moulage, où il décantera naturellement pour évacuer le maximum de sérum, dans un temps d'environ 20 minutes.

Le pain de caillé est ensuite dirigé vers le poste de pressage afin d'évacuer le maximum de sérum subsistant dans le pain, pendant environ 6 heures.

Le fromage non affiné ainsi obtenu est dirigé, comme cité ci-dessus, vers un poste d'affinage, en fait une cave ou une chambre tempérée à environ 12° constant pendant 16, 19 ou 24 heures.

Des installations de ce type sont connues, comme par exemple celle décrite dans le document EP2283722, dans lesquelles la palettisation s'effectue de manière semi-automatique, c'est-à-dire par un engin élévateur conduit par un opérateur qui le présente devant le poste de transfert où a été amené un moule. Le même opérateur ou un second opérateur a pour rôle de pousser manuellement le moule sur l'engin élévateur qui le met en place dans le poste de pressage, selon deux méthodes.

Dans l'une des méthodes, l'engin élévateur est fixe. Dans ce cas, c'est le poste de pressage qui est mobile. L'engin n'effectue qu'un mouvement de montée et de descente.

L'inconvénient réside dans le fait que l'installation est semi-automatique car nécessitant toujours l'intervention humaine.

L'autre méthode consiste à réaliser un poste de pressage linéaire. Dans ce cas, l'opérateur présentera l'engin de levage devant le poste de transfert, et comme précédemment, l'opérateur poussera manuellement le moule sur l'engin, qui manoeuvrera pour le porter en lieu et place du poste de pressage.

Dans les deux cas, l'opérateur de chargement au niveau du poste de transfert est nécessaire. Le transfert du palettiseur devant les places de pressage peut être mécanisé, mais c'est au prix une installation lente et coûteuse.

La présente invention selon la revendication 1 a pour but de remédier à ces inconvénients et s'applique plus particulièrement à une installation dont le poste de pressage est globalement circulaire, mais ne nécessitant plus qu'il soit rotatif, donc de conception plus simple et fonctionnant sans aucun opérateur.

A cet effet, l'invention concerne une installation destinée notamment au domaine de l'agroalimentaire, pour la fabrication du fromage à pâte pressée, comportant :
- un poste de moulage dans lequel sont disposés des moules perforés, préalablement remplis d'un caillé,
- un poste de pressage en forme de tour circulaire, comprenant une pluralité de colonnes étagées, disposées en arc de cercle, dans lesquelles sont entreposés les moules de caillé, puis soumis à une pression afin d'évacuer le sérum généré par le caillé,
- un poste de transfert intermédiaire des moules depuis le poste de moulage vers le poste de pressage,
- un palettiseur sur lequel est disposé successivement chaque moule issu du poste de transfert, pour le placer à un emplacement libre du poste de pressage,
le palettiseur étant un robot programmable, disposé à l'intérieur de la tour de pressage, et est constitué d'un châssis vertical sur lequel est rapporté un chariot mobile, disposant de moyens de préhension du moule sur le poste de transfert et assujetti à des moyens d'entraînement motorisés en translation et en élévation, ledit châssis reposant par sa base sur un rail de guidage au sol, concentrique à la tour et susceptible d'être entrainé en rotation par rapport à un axe central de l'ensemble, en décrivant un arc de cercle, de manière à obtenir un déplacement du chariot, et donc du moule, selon trois directions à l'intérieur de la tour de pressage.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente une vue de dessus de l'installation comprenant un palettiseur selon l'invention.

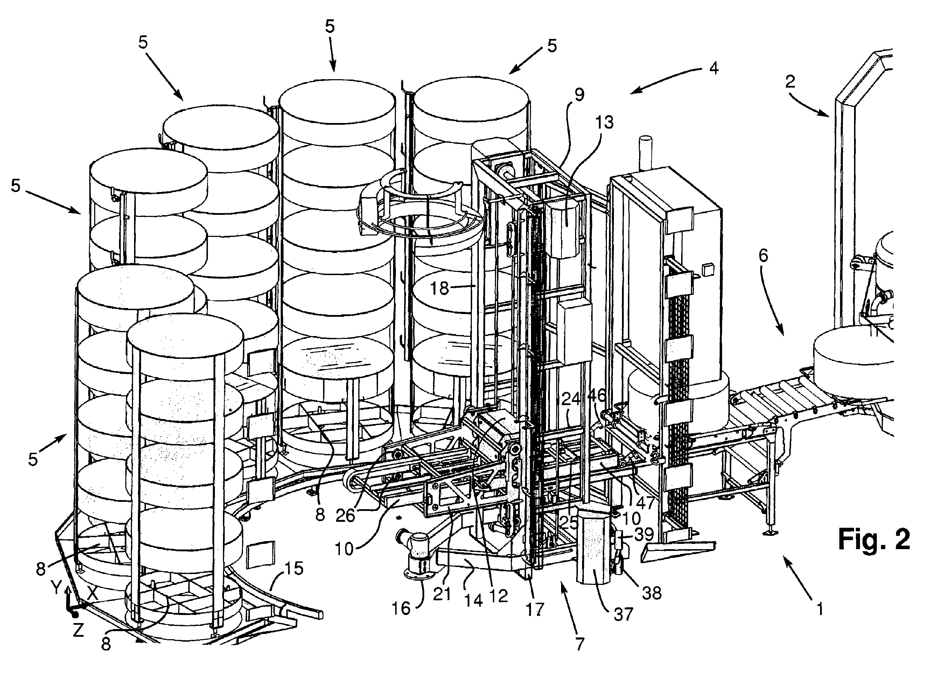

La figure 2 représente une vue en perspective de l'installation selon la figure 1, dont une partie du poste de pressage a été coupée pour une meilleure visibilité du palettiseur objet de l'invention.

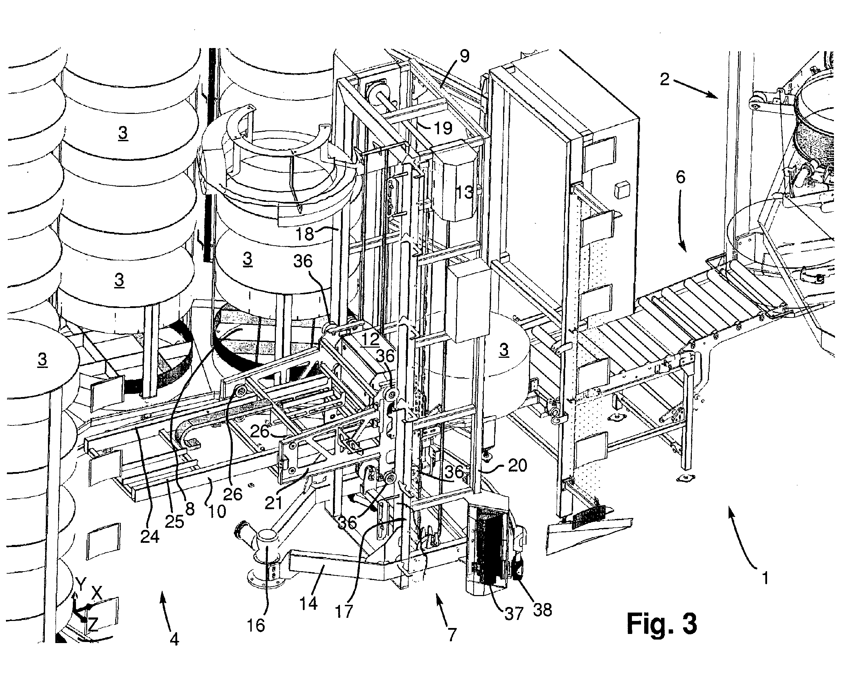

La figure 3 est une vue en perspective à échelle agrandie du palettiseur, pour une meilleure compréhension de son fonctionnement, après préhension d'un moule sur le poste de transfert.

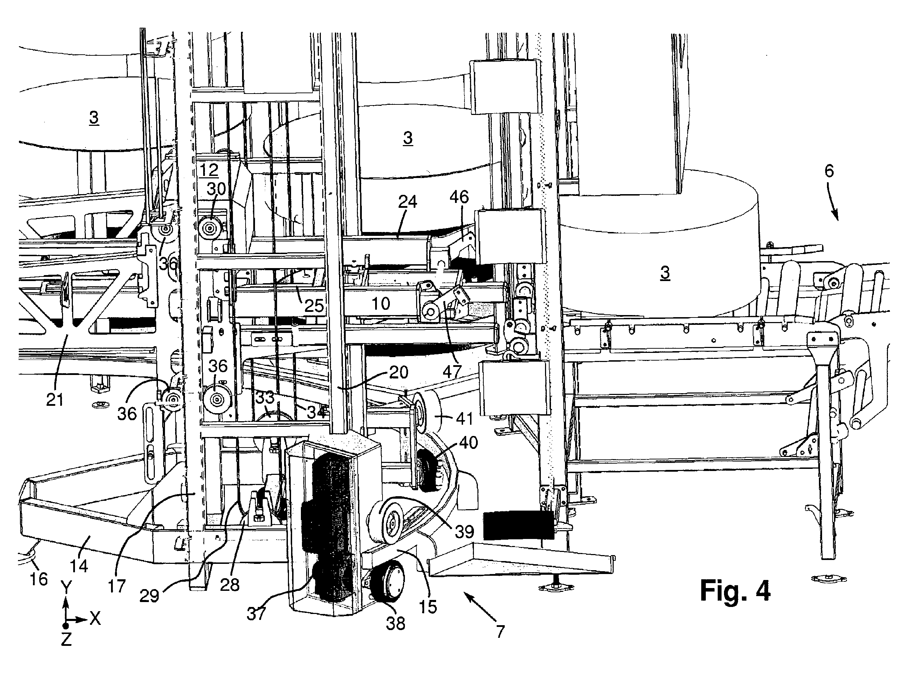

La figure 4 représente, en perspective à échelle agrandie, la partie basse du palettiseur, pour une meilleure compréhension de son système d'entrainement rotatif.

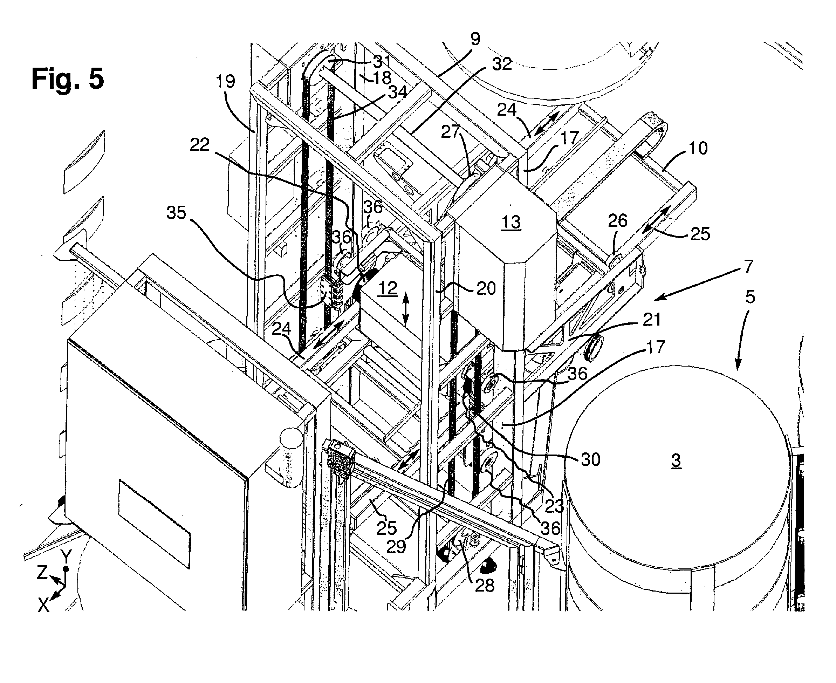

La figure 5 représente, en perspective à échelle agrandie, une vue de dessus du palettiseur montrant plus particulièrement les moyens d'entrainement en translation et en élévation du chariot porteur du moule.

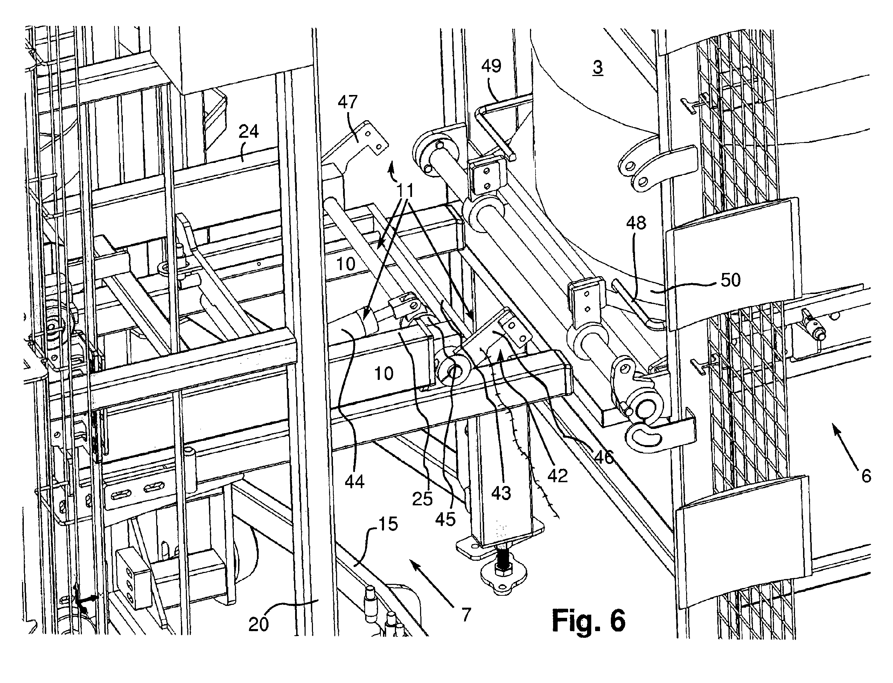

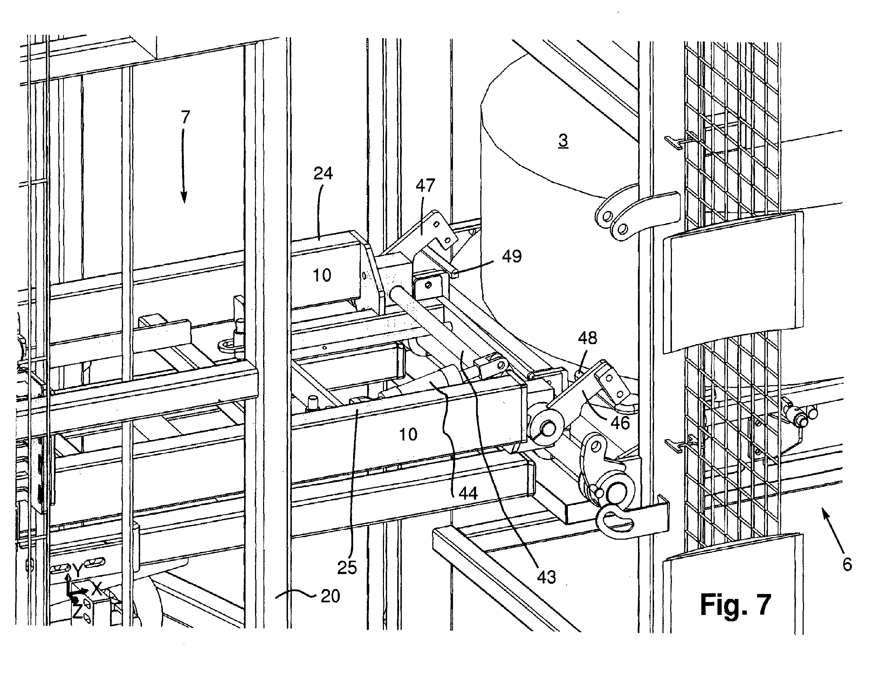

Les figures 6 et 7 représentent, en perspective à échelle agrandie, le chariot et ses moyens de préhension du moule, respectivement en cours d'approche et immédiatement avant préhension.

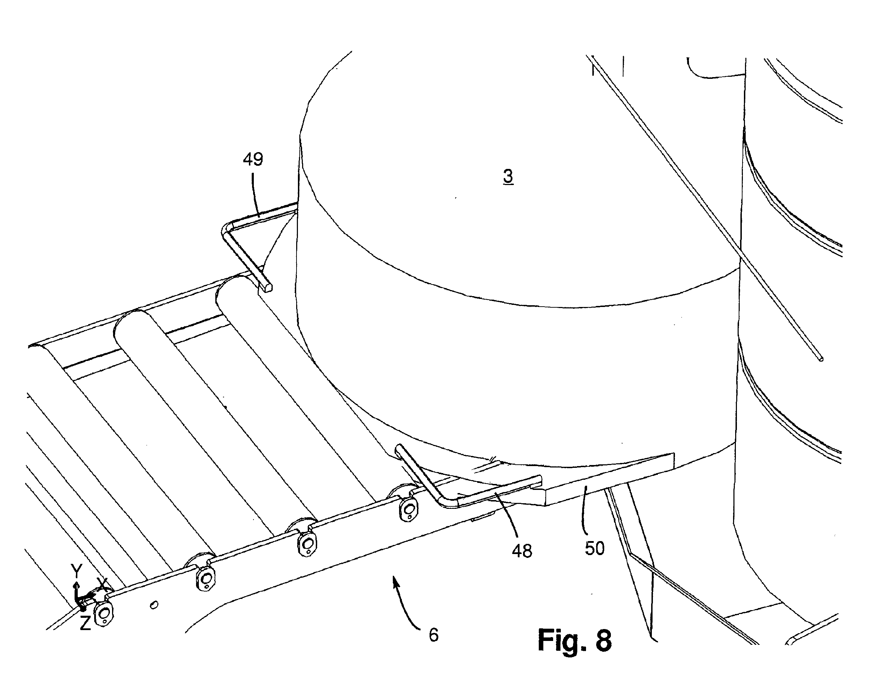

La figure 8 montre, en perspective à échelle agrandie, le moule seul sur le poste de transfert, montrant ses moyens de préhension, complémentaires à celui du chariot du robot.

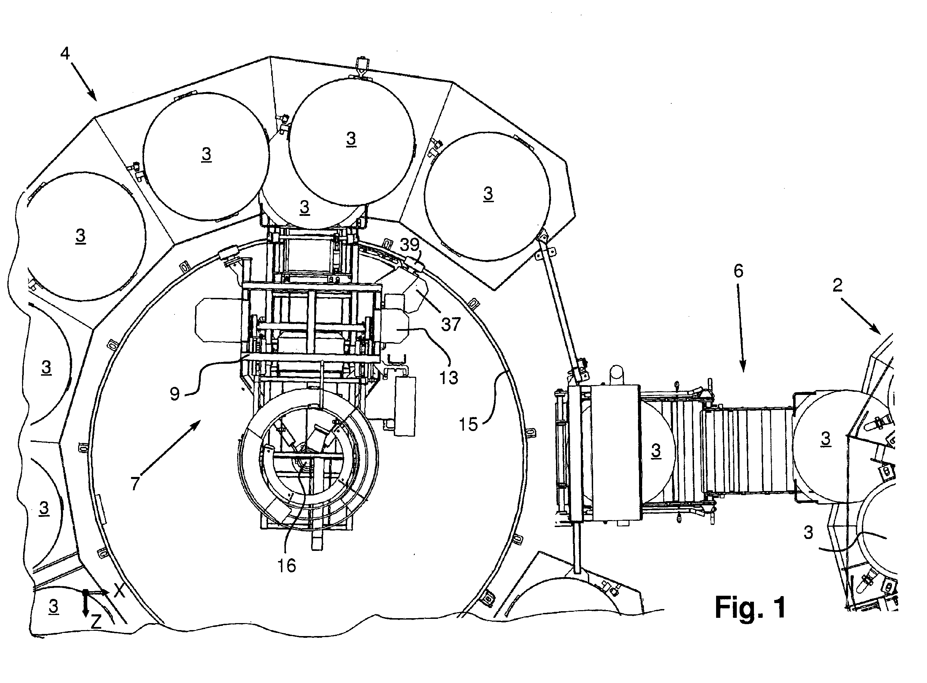

L'installation 1 globalement désignée sur la figure 1 est destinée notamment à la fabrication du fromage. Mais en ce qui concerne le palettiseur proprement dit, objet de l'invention, celui-ci est adaptable à tout produit devant être stocké dans un rayonnage adapté.

Selon le présent exemple d'application, l'installation comporte, de manière connue :
- un poste de moulage 2 dans lequel sont disposés des moules 3 perforés, préalablement remplis d'un caillé,
- un poste de pressage 4 en forme de tour circulaire, comprenant une pluralité de colonnes étagées 5, disposées en arc de cercle, dans lesquelles sont entreposés les moules de caillé, puis soumis à une pression afin d'évacuer le sérum généré par le caillé,
- un poste de transfert intermédiaire 6 des moules 3 depuis le poste de moulage 2 vers le poste de pressage 4,
- un palettiseur 7 sur lequel est disposé successivement chaque moule 3 issu du poste de transfert 6, pour le placer à un emplacement libre 8 du poste de pressage 4.

Selon l'invention, et comme le montre bien la figure 1, le palettiseur 7 est un robot programmable, disposé à l'intérieur de la tour de pressage 4. Il est constitué d'un châssis vertical 9 sur lequel est rapporté un chariot mobile 10, disposant de moyens de préhension 11 du moule 3 sur le poste de transfert 6 et assujetti à des moyens d'entraînement motorisés en translation 12 et en élévation 13. Ledit châssis 9 repose par sa base 14 sur un rail de guidage 15 au sol, concentrique à la tour 4 et susceptible d'être entrainé en rotation par rapport à un axe central 16 de l'ensemble 7, en décrivant un arc de cercle, de manière à obtenir un déplacement du chariot 10, et donc du moule 3, selon trois directions à l'intérieur de la tour de pressage 4.

Le châssis 9 du palettiseur 7 est constitué par une cage ouverte, délimitée verticalement par quatre montants verticaux 17,18,19,20, à l'intérieur de laquelle évolue le chariot 10 en translation horizontale et/ou en élévation verticale.

Selon une autre caractéristique de l'invention, le chariot 10 est associé à un tiroir 21, fixe en translation, mobile en élévation, disposé entre les montants 18,19-17,20 de deux côtés verticaux parallèles de la cage formée par le châssis 9, ledit chariot 10 étant susceptible d'être entrainé en translation par rapport au tiroir 21, fixe dans cette direction, par des premiers moyens d'entrainement 12, lequel tiroir 21 est lui-même susceptible d'être entrainé en élévation par rapport au châssis 9 par des seconds moyens d'entrainement 13.

Les premiers moyens d'entrainement du chariot 10 en translation sont constitués par un moteur d'entrainement 12, fixé sur le tiroir 21, auquel sont associées des roulettes motrices 22,23, en contact avec des rails parallèles 24,25 formés par les côtés longitudinaux supérieurs du chariot 10 en translation.

Des roulettes suiveuses 26 sont disposées fixement sur le tiroir 21, pour guider le chariot 10.

Les seconds moyens d'entrainement du chariot 10 en élévation sont constitués par un moteur d'entrainement 13, fixé à une partie supérieure du châssis 9 et associé à une poulie motrice 27, en liaison avec une poulie de renvoi 28 disposée à une partie inférieure du châssis 9, reliées entre elles par au moins une courroie 29 de liaison, sur une zone choisie de laquelle est fixée un élément d'accouplement 30 du tiroir 21.

Préférentiellement, la poulie motrice 27 est reliée à une poulie de transmission 31, disposée en vis-à-vis de l'autre côté du châssis 9, fixement reliée à la poulie motrice 27 par un arbre 32, ladite poulie 31 étant elle-même reliée à une poulie de renvoi inférieure 33 par l'intermédiaire d'une seconde courroie 34.

Le tiroir 21 est relié par un second élément d'accouplement 35 à la seconde courroie 34.

Par ailleurs, le tiroir 21 est guidé verticalement par rapport au châssis 9, par l'intermédiaire de roulettes libres 36 liées au tiroir 21 de part et d'autre de celui-ci, prenant appui de part et d'autre de deux montants verticaux opposés 17,18 du châssis 9.

Selon une autre caractéristique de l'invention, le déplacement rotatif de l'ensemble de châssis 9 - tiroir 21 - chariot 10 s'effectue par l'intermédiaire d'un moteur d'entrainement 37, fixé à une partie inférieure d'un montant 20 du châssis 9, associé à une roulette motrice 38 en contact avec un côté du rail de guidage concentrique 15 au sol, une roulette suiveuse 39 étant en contact avec le côté opposé du rail 15.

D'autres couples de roulettes suiveuses 40,41 sont également réparties sur la base du châssis 9, pour un meilleur équilibre du palettiseur 7 en fonctionnement.

Selon une autre caractéristique de l'invention, le chariot 10 comprend, à son extrémité dirigée vers le poste de transfert 6, un dispositif de crochetage 42 constitué par une barre transversale 43 susceptible d'être actionnée en rotation par un vérin 44 associé à une bielle 45, les extrémités de la barre rotative 43 étant solidaires de deux crochets de préhension 46,47, aptes à coopérer avec deux crochets correspondants 48,49 d'un plateau porteur d'un moule 3 disposé initialement sur le poste de transfert 6, pour l'entrainer en translation vers le palettiseur 7 et pour le diriger ensuite vers un emplacement libre 8 du poste de pressage 4, après rotation dudit palettiseur 7 sur lui-même et élévation du tiroir 21 et de son chariot 10.

## Revendications

1. Installation (1) destinée notamment au domaine de l'agroalimentaire, pour la fabrication du fromage à pâte pressée, comportant :
- un poste de moulage (2) dans lequel sont disposés des moules (3) perforés, préalablement remplis d'un caillé,
- un poste de pressage (4) en forme de tour circulaire, comprenant une pluralité de colonnes étagées (5), disposées en arc de cercle, dans lesquelles sont entreposés les moules de caillé, puis soumis à une pression afin d'évacuer le sérum généré par le caillé,
- un poste de transfert intermédiaire (6) des moules (3) depuis le poste de moulage (2) vers le poste de pressage (4),
- un palettiseur (7) sur lequel est disposé successivement chaque moule (3) issu du poste de transfert (6), pour le placer à un emplacement libre (8) du poste de pressage (4), le palettiseur (7) étant un robot programmable, et est constitué d'un châssis vertical (9) sur lequel est rapporté un chariot mobile (10), disposant de moyens de préhension (11) du moule (3) sur le poste de transfert (6) et assujetti à des moyens d'entraînement motorisés en translation (12) et en élévation (13), **caractérisée en ce que** le palettiseur est disposé à l'intérieur de la tour de pressage (4), ledit châssis (9) reposant par sa base (14) sur un rail de guidage (15) au sol, concentrique à la tour (4) et susceptible d'être entrainé en rotation par rapport à un axe central (16) de l'ensemble (7), en décrivant un arc de cercle, de manière à obtenir un déplacement du chariot (10), et donc du moule (3), selon trois directions à l'intérieur de la tour de pressage (4).

2. Installation selon la revendication 1, **caractérisée en ce que** le châssis (9) du palettiseur (7) est constitué par une cage ouverte, délimitée verticalement par quatre montants verticaux (17,18,19,20), à l'intérieur de laquelle évolue le chariot (10) en translation horizontale et/ou en élévation verticale.

3. Installation selon l'une des revendications 1 ou 2, **caractérisée en ce que** le chariot (10) est associé à un tiroir (21), fixe en translation, mobile en élévation, disposé entre les montants (18,19-17,20) de deux côtés verticaux parallèles de la cage formée par le châssis (9), ledit chariot (10) étant susceptible d'être entrainé en translation par rapport au tiroir (21), fixe dans cette direction, par des premiers moyens d'entrainement (12), lequel tiroir (21) est lui-même susceptible d'être entrainé en élévation par rapport au châssis (9) par des seconds moyens d'entrainement (13).

4. Installation selon la revendication 3, **caractérisée en ce que** les premiers moyens d'entrainement du chariot (10) en translation sont constitués par un moteur d'entrainement (12), fixé sur le tiroir (21), auquel sont associées des roulettes motrices (22,23), en contact avec des rails parallèles (24,25) formés par les côtés longitudinaux supérieurs du chariot (10) en translation.

5. Installation selon la revendication 3, **caractérisée en ce que** les seconds moyens d'entrainement du chariot (10) en élévation sont constitués par un moteur d'entrainement (13), fixé à une partie supérieure du châssis (9) et associé à une poulie motrice (27), en liaison avec une poulie de renvoi (28) disposée à une partie inférieure du châssis (9), reliées entre elles par au moins une courroie (29) de liaison, sur une zone choisie de laquelle est fixée un élément d'accouplement (30) du tiroir (21).

6. Installation selon la revendication 5, **caractérisée en ce que** le tiroir (21) est guidé verticalement par rapport au châssis (9), par l'intermédiaire de roulettes libres (36) liées au tiroir (21) de part et d'autre de celui-ci, prenant appui de part et d'autre de deux montants verticaux opposés (17,18) du châssis (9).

7. Installation selon l'une des revendications 1 à 6, **caractérisée en ce que** le déplacement rotatif de l'ensemble de châssis (9) - tiroir (21) - chariot (10) s'effectue par l'intermédiaire d'un moteur d'entrainement (37), fixé à une partie inférieure d'un montant (20) du châssis (9), associé à une roulette motrice (38) en contact avec un côté du rail de guidage concentrique (15) au sol, une roulette suiveuse (39) étant en contact avec le côté opposé du rail (15).

8. Installation selon l'une des revendications 1 à 7, **caractérisée en ce que** le chariot (10) comprend, à son extrémité dirigée vers le poste de transfert (6), un dispositif de crochetage (42) constitué par une barre transversale (43) susceptible d'être actionnée en rotation par un vérin (44) associé à une bielle (45), les extrémités de la barre rotative (43) étant solidaires de deux crochets de préhension (46,47), aptes à coopérer avec deux crochets correspondants (48,49) d'un plateau porteur d'un moule (3) disposé initialement sur le poste de transfert (6), pour l'entrainer en translation vers le palettiseur (7) et pour le diriger ensuite vers un emplacement libre (8) du poste de pressage (4), après rotation dudit palettiseur (7) sur lui-même et élévation du tiroir (21) et de son chariot (10).

## Patentansprüche

1. Anlage (1), die insbesondere für die Lebensmittelbranche für die Herstellung von Hartkäse bestimmt ist, die aufweist:
- eine Formungsstation (2), in der perforierte, zuvor mit geronnener Milch gefüllte Formen (3) angeordnet sind,
- eine Pressstation (4) in Form einer kreisrunden Maschine, die eine Vielzahl abgestufter, kreisbogenförmig angeordneter Säulen (5) umfasst, in denen die Formen mit geronnener Milch angeordnet sind und danach einem Druck ausgesetzt werden, um das von der geronnenen Milch erzeugte Serum abzuleiten,
- eine Übergangs-Transferstation (6) der Formen (3) von der Formungsstation (2) zur Pressstation (4),
- einen Plattisierer (7), auf dem nacheinander jede Form (3) aus der Transferstation (6) angeordnet wird, um sie an einer Stelle (8) außerhalb der Pressstation (4) zu platzieren, wobei der Palettisierer (7) ein programmierbarer Roboter ist und von einem vertikalen Gestell (9) gebildet wird, auf dem ein beweglicher Wagen (10) befestigt ist, der über Greifmittel (11) der Form (3) auf der Transferstation (6) verfügt und motorisierten verschiebenden (12) und hebenden (13) Antriebsmitteln unterworfen ist, **dadurch gekennzeichnet, dass** der Palettisierer im Pressturm (4) angeordnet ist, wobei das Gestell (9) mit seiner Basis (14) auf einer Führungsschiene (15) am Boden ruht, die konzentrisch zum Turm (4) ist und imstande, im Verhältnis zu einer zentralen Achse (16) der Gruppe (7) derart angetrieben zu sein, dass eine Verlagerung des Wagens (10) und damit der Form (3) in drei Richtungen im Pressturm (4) erreicht wird.

2. Anlage nach Anspruch 1, **dadurch gekennzeichnet, dass** das Gestell (9) des Palettisierers (7) von einem offenen Käfig gebildet wird, der vertikal von vier vertikalen Pfosten (17, 18, 19, 20) begrenzt ist, in dem sich der Wagen (10) horizontal verschiebend und/oder vertikal hebend bewegt.

3. Anlage nach einem der Ansprüche 1 oder 2, **dadurch gekennzeichnet, dass** der Wagen (10) einem in Verschiebung starren, im Hub beweglichen Fach (21) zugeordnet ist, das zwischen den Pfosten (18, 19-17, 20) auf zwei vertikalen, parallelen Seiten des vom Gestell (9) gebildeten Käfigs angeordnet ist, wobei der Wagen (10) imstande ist, im Verhältnis zum in dieser Richtung starren Fach (21) von ersten Antriebsmitteln (12) verschiebend angetrieben zu sein, wobei das Fach (21) selbst imstande ist, im Verhältnis zum Gestell (9) hebend von zweiten Antriebsmitteln (13) angetrieben zu sein.

4. Anlage nach Anspruch 3, **dadurch gekennzeichnet, dass** die verschiebenden ersten Antriebsmittel des Wagens (10) von einem auf dem Fach (21) befestigten Antriebsmotor (12) gebildet werden, dem Triebräder (22, 23) im Kontakt mit parallelen Schienen (24, 25) zugeordnet sind, die von den oberen Längsseiten des Wagens (10) in Verschiebung gebildet werden.

5. Anlage nach Anspruch 3, **dadurch gekennzeichnet, dass** die hebenden zweiten Antriebsmittel des Wagens (10) von einem auf einem oberen Teil des Gestells (9) befestigten Antriebsmotor (13) gebildet werden, der einer motorisierten Rolle (27) in Verbindung mit einer Umlenkrolle (28), die in einem unteren Teil des Gestells (9) angeordnet ist, zugeordnet ist, welche untereinander in einem ausgewählten Bereich, in dem ein Kopplungselement (30) des Fachs (21) befestigt ist, durch mindestens einen Verbindungsriemen (29) verbunden sind.

6. Anlage nach Anspruch 5, **dadurch gekennzeichnet, dass** das Fach (21) im Verhältnis zum Gestell (9) mit Hilfe von freien Rädern (36), die auf der einen und der anderen Seite mit dem Fach (21) verbunden sind, vertikal geführt wird, wobei eine Abstützung auf der einen und der anderen Seite auf zwei gegenüberliegenden vertikalen Pfosten (17, 18) des Gestells (9) erfolgt.

7. Anlage nach einem der Ansprüche 1 bis 6, **dadurch gekennzeichnet, dass** die rotierende Verlagerung der Gruppe Gestell (9) - Fach (21) - Wagen (10) mit Hilfe eines Antriebsmotors (37) erfolgt, der an einem unteren Teil eines Pfostens (20) des Gestells (9) befestigt und einem Antriebsrad (38) im Kontakt mit einer Seite der konzentrischen Führungsschiene (15) am Boden zugeordnet ist, wobei ein Folgerad (39) mit der gegenüberliegenden Seite der Schiene (15) im Kontakt ist.

8. Anlage nach einem der Ansprüche 1 bis 7, **dadurch gekennzeichnet, dass** der Wagen (10) an seinem zur Transferstation (6) zeigenden Ende eine Kopplungsvorrichtung (42) umfasst, die von einem Querstab (43) gebildet wird, der imstande ist, von einem einer Pleuelstange (45) zugeordneten Zylinder (44) rotierend angetrieben zu sein, wobei die Enden des rotierenden Stabs (43) mit zwei Greifhaken (46, 47) verbunden sind, die imstande sind, mit zwei entsprechenden Haken (48, 49) einer eine Form (3) tragenden Platte, welche zunächst auf der Transferstation (6) angeordnet ist, zusammenzuarbeiten, um sie verschiebend zum Palettisierer (7) anzutreiben und sie danach nach Rotation des Palettisierers (7) um sich selbst und Heben des Fachs (21) und seines Wagens (10) zu einer freien Stelle (8) der Pressstation (4) zu lenken.

## Claims

1. An installation (1) notably intended for the agrifood industry, for making pressed cheese, including:
- a molding station (2) in which are positioned perforated molds (3), filled beforehand with a curd,
- a pressing station (4) with the shape of a circular tower, comprising a plurality of staged columns (5) positioned along a circular arc, in which curd molds are stored and then subject to pressure in order to remove the serum generated by the curd,
- an intermediate station (6) for transferring the molds (3) from the molding station (2) to the pressing station (4),
- a palletizer (7) on which each mold (3) from the transfer station (6) is successively positioned, for placing it at a free location (8) of the pressing station (4),
the palletizer (7) being a programmable robot and consists of a vertical chassis (9) on which is added a mobile carriage (10) having means (11) for grasping the mold (3) on the transfer station (6) and subjected to motor-driven means for driving it in translation (12) and in elevation (13), **characterized in that** the pallettizer is positioned inside the pressing tower (4), said chassis (9) resting with its base (14) on a guide rail (15) on the ground, concentric with the tower (4) and may be driven into rotation relatively to a central axis (16) of the assembly (7), by describing a circular arc, so as to obtain displacement of the carriage (10), and therefore of the mold (3), along three directions inside the pressing tower (4).

2. The installation according to claim 1, **characterized in that** the chassis (9) of the palletizer (7) is formed by an open cage, vertically delimited by four vertical uprights (17, 18, 19, 20), inside which the carriage (10) moves in horizontal translation and/or in vertical elevation.

3. The installation according to one of claims 1 or 2, **characterized in that** the carriage (10) is associated with a drawer (21), fixed in translation, mobile in elevation, positioned between the uprights (18, 19-17, 20) of two parallel vertical sides of the cage formed by the chassis (9), said carriage (10) being able to be driven in translation relatively to the drawer (21), fixed in this direction, by first driving means (12), which drawer (21) may itself be driven in elevation relatively to the chassis (9) by second driving means (13).

4. The installation according to claim 3, **characterized in that** the first means for driving the carriage (10) in translation are formed by a drive motor (12), fixed on the drawer (21), with which are associated driving wheels (22, 23), in contact with parallel rails (24, 25) formed by the upper longitudinal sides of the carriage (10) in translation.

5. The installation according to claim 3, **characterized in that** the second means for driving the carriage (10) in elevation are formed by a drive motor (13), fixed to an upper portion of the chassis (9) and associated with a driving pulley (27), in connection with a return pulley (28) positioned at a lower portion of the chassis (9), connected together for through at least one connecting belt (29), on a selected area from which a coupling element (30) of the drawer (21) is fixed.

6. The installation according to claim 5, **characterized in that** the drawer (21) is vertically guided relatively to the chassis (9), via free wheels (36) bound to the drawer (21) on either side of the latter, bearing upon either side of two opposite vertical uprights (17, 18) of the chassis (9).

7. The installation according to one of claims 1 to 6, **characterized in that** the rotary displacement of the chassis (9) - drawer (21) - carriage (10) assembly is accomplished via a drive motor (37), fixed to a lower portion of an upright (20) of the chassis (9), associated with a driving wheel (38) in contact with a side of the concentric guide rail (15) on the ground, a following wheel (39) being in contact with the opposite side of the rail (15).

8. The installation according to one of claims 1 to 7, **characterized in that** the carriage (10) comprises, at its end directed towards the transfer station (6), a hooking-up device (42) formed by a crossbar (43) which may be actuated in rotation by an actuator cylinder (44) associated with a connecting rod (45), the ends of the rotary bar (43) being secured to two grasping hooks (46, 47), capable of cooperating with two corresponding hooks (48, 49) of a table bearing a mold (3) initially positioned on the transfer station (6), in order to drive it into translation towards the palletizer (7) and then to direct it towards a free location (8) of the pressing station (4), after rotating said palletizer (7) on itself and elevating the drawer (21) and its carriage (10).
